# EUROPEAN PATENT APPLICATION

(11) **EP 4 725 704 A1**
(43) Date of publication of application: **15.04.2026**
(21) Application number: 25199868.8
(22) Date of filing: 03.09.2025
(51) Int. Cl.: B41J 2/165

(54) **LOCALIZED PRINTHEAD CLEANING IN A PRINTING SYSTEM**

(30) Priority: 18.09.2024 ES 202430736
(71) Applicant: Electronics for Imaging, Inc., Londonderry, NH 03053 (US)
(72) Inventor: BUENO ESPINAL, Eduardo, 12550 Almazora, Comunidad Valenciana (ES)
(74) Representative: Stöckeler, Ferdinand

(57) **Abstract**

Apparatuses, methods, and systems for localized printhead cleaning of a printing system are disclosed. A printing system performs a printhead health check operation for a printhead of the printing system. The printhead health check operation includes identifying and recording a set of nozzle defects within the printhead's nozzles, which can include any of clogs, misfires, and inconsistencies. Based on the printhead health check operation, the printing system determines a set of nozzle degradation metric values for the printhead, indicating the extent and nature of the nozzle defects. Using the set of nozzle degradation metric values, the printing system generates a set of actions for a carrier associated with the printhead. The set of actions adjusts at least one parameter of the cleaning device, such as its speed, motion profile, vacuum level, or wiper pressure, and defines a printhead actuation strategy. The printing system performs the cleaning of the printhead in accordance with the generated actions.

## Description

### TECHNICAL FIELD

The embodiments described herein relate generally to printing systems. More particularly, the embodiments relate to methods for cleaning and recovering systems for inkjet printheads.

### BACKGROUND

The printhead cleaning system is a subsystem for industrial inkjet printers. Printhead nozzles can become partially or completely clogged due to multiple causes resulting in the appearance of non-printed areas. Some of the possible sources of printing defects include trapped air bubbles inside the printhead, foreign particles in the nozzle plate, and nozzle plate wetting.

### SUMMARY

Introduced here are systems and approaches for localized printhead cleaning of a printing system. In some embodiments, a printing system performs a printhead health check operation for a printhead of the printing system. The printhead health check operation includes identifying and recording a set of nozzle defects within the printhead's nozzles, such as clogs, misfires, and/or inconsistencies. Based on the printhead health check operation, the printing system determines a set of nozzle degradation metric values for the printhead, indicating the extent and nature of the nozzle defects. The nozzle degradation metric values are associated with the health status of the printhead nozzles. Using the set of nozzle degradation metric values, the printing system generates a set of actions for a carrier associated with the printhead. The carrier can be a movable carriage affixed to the base of the printing system and equipped with a cleaning device configured to clean the printhead. The set of actions adjusts at least one parameter of the cleaning device, such as its speed, motion profile, vacuum level, or wiper pressure, and defines a printhead actuation strategy. The printing system performs the cleaning of the printhead in accordance with the generated actions.

Exemplary embodiments herein include performing a printhead health check operation for a printhead of the printing system by evaluating a printed template using one or more camera sensors of the printing system. Based on the evaluation, the printing system identifies the cleanliness level of the printhead using a camera of the carrier pointing to the plate surface of the printer nozzles. Additionally, the printing system can detect nozzle outs using a laser emitter-receiver pair of the carrier and identify interruptions in the expected trajectory of jetted drops from the nozzles. Abnormal jetting can be evaluated using a nozzle actuator of the carrier. The identification and recordation of nozzle defects include noting the frequency, severity, and/or location of the defects within the printhead nozzles.

These and other aspects, features, and implementations can be expressed as methods, apparatus, systems, components, program products, means or steps for performing a function, and in other ways. These and other aspects, features, and implementations will become apparent from the following descriptions, including the claims.

### BRIEF DESCRIPTION OF THE DRAWINGS

Figure 1 is a block diagram illustrating a perspective view of a printing system, in accordance with one or more embodiments.
Figure 2 is a block diagram illustrating a side view of a printing system, including a printer head and a light source, in accordance with one or more embodiments.
Figure 3 is a schematic diagram of an example environment of a printhead array and a movable carrier system to perform cleaning operations, according to an embodiment.
Figure 4 is a schematic diagram of a front view of a single pass inkjet printer, according to an embodiment.
Figure 5 shows a printed image processed to evaluate printhead nozzle health using human or computer vision techniques, according to an embodiment.
Figure 6 is a graph showing an example relationship between nozzle degradation metric values versus cleaning system speeds, according to an embodiment.
Figure 7 is a flow diagram for performing a cleaning operation, according to an embodiment.
Figure 8 is a high-level block diagram illustrating an example AI system, in accordance with one or more implementations.
Figure 9 is a block diagram that illustrates an example of a computer system in which at least some operations described herein can be implemented.

### DETAILED DESCRIPTION

In the following description, for the purposes of explanation, numerous specific details are set forth in order to provide a thorough understanding of the present embodiments. It will be apparent, however, that the present embodiments may be practiced without these specific details.

This document presents systems, methods, and apparatus for localized printhead cleaning of a printing system. Conventional methods for printhead cleaning of a printing system typically involve uniform cleaning processes that apply the same cleaning intensity and/or duration across the entire printhead, regardless of the varying levels of nozzle degradation. As a result, some nozzles may be over-cleaned, leading to unnecessary wear and tear, which can shorten their lifespan and/or increase maintenance costs. Conversely, other nozzles may remain inadequately cleaned, causing persistent print quality issues such as streaks, smudges, or missing lines in the printed output. Additionally, conventional cleaning methods can be time-consuming and resource-intensive, as they do not dynamically adjust to the varying levels of nozzle degradation across a particular printhead. The inefficiency is resource-intensive as conventional methods not only waste time but also consumes excessive amounts of cleaning fluids and energy, further driving up operational costs and reducing the overall efficiency of the printing system.

The embodiments disclosed herein present methods for performing a printhead health check of the printhead, identifies and records specific nozzle defects, and determines a set of nozzle degradation metric values. Based on the set of nozzle degradation metric values, which quantify the extent and nature of the defects, the printing system generates and executes targeted cleaning actions. The actions can include adjusting various parameters such as carrier speed, motion profile, vacuum level, and wiper pressure to ensure efficient and effective cleaning. For instance, the carrier speed can be reduced in areas with high concentrations of defects to allow for more thorough cleaning, while the vacuum level and wiper pressure can be increased to remove stubborn clogs.

The advantages and benefits of the method of using a localized approach for printhead cleaning using the embodiments described herein include improving print quality by ensuring that all nozzles are adequately cleaned. By addressing nozzle defects on a localized basis, the printing system can produce high-quality prints with consistent color and sharpness, free from streaks or missing lines. Additionally, the localized approach extends the lifespan of the printhead by preventing unnecessary wear on nozzles that are in good condition. By avoiding over-cleaning, the printing system reduces the risk of damaging the nozzles, thereby lowering maintenance costs and prolonging the intervals between printhead replacements. Furthermore, the localized approach reduces downtime and resource consumption, improving the overall productivity and cost-effectiveness of the printing system. By dynamically adjusting the cleaning actions based on real-time data, the printing system lowers the time and resources used for maintenance, allowing for more efficient use of the printing system and reducing operational costs.

### Printing System

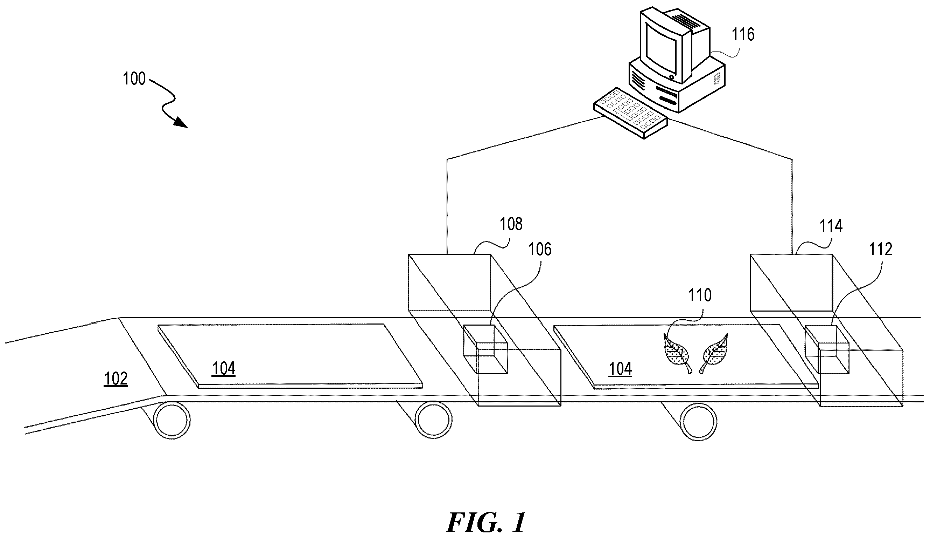

Figure 1 is a block diagram illustrating a perspective view of a printing system 100, in accordance with one or more embodiments. The printing system 100 includes a printer head 106, at least one light source 112, and a transfer belt 102. Embodiments may also include other components, e.g., a dryer. For example, the light source 112 is present in some embodiments, but not in others. In some examples, while the printing system 100 of Figure 1 includes a transfer belt 102, other means for conveying and/or retaining a substrate 104 can be used.

The printer head 106 is configured to deposit ink onto a substrate 104 in the form of an image 110. In some embodiments, the printer head 106 is an inkjet printer head that jets ink onto the substrate 104 using, for example, piezoelectric nozzles. In some embodiments, the ink is a solid energy, e.g., UV curable ink. However, other inks are also used, such as water-based energy curable inks or solvent-based energy curable inks.

In some embodiments, one or more light sources 112 cure some or all of the ink deposited onto the substrate 104 by emitting UV radiation. In some examples, the light source(s) 112 is any combination of UV fluorescent bulbs, UV light emitting diodes (LEDs), low-pressure, e.g., mercury (Hg), bulbs, or excited dimer (excimer) lamps and/or lasers. Various combinations of these light sources could be used. In some examples, a printing system 100 includes a low-pressure Hg lamp and a UV LED. The light source 112 may be configured to emit UV radiation of a particular subtype.

The printer head 106 and light source 112 are illustrated as being directly adjacent to one another, i.e., neighboring without any intervening components. However, in other embodiments, additional components that assist in printing, curing, etc., are also present. In some examples, multiple distinct light sources 112 is positioned behind the printer head 106. Figure 1 illustrates one possible order in which components are arranged in order to print an image 110 onto the substrate 104. Other embodiments are considered in which additional components are placed before, between, or after the illustrated components, etc.

In some embodiments, one or more of the aforementioned components are housed within one or more stations. For example, the printer head 106 is housed within a printing station 108, the light source 112 is housed within a radiation station 114, etc. In addition to protecting the components from damage, the stations, in some examples, also serve other benefits. For example, the curing radiation station 114 limits what part(s) of the substrate 104 and image 110 are exposed during the curing process. The stations may be fixedly attached to a track or chassis of the printing system 100. The substrate 104 is moved in relation to the printer head 106, light source 112, etc., such that ink is deposited onto the substrate 104.

In various embodiments, some or all of the components are controlled by a computer system 116. In some examples, the computer system 116 allows a user to input printing instructions and information, modify print settings, e.g., by changing cure settings, alter the printing process, etc.

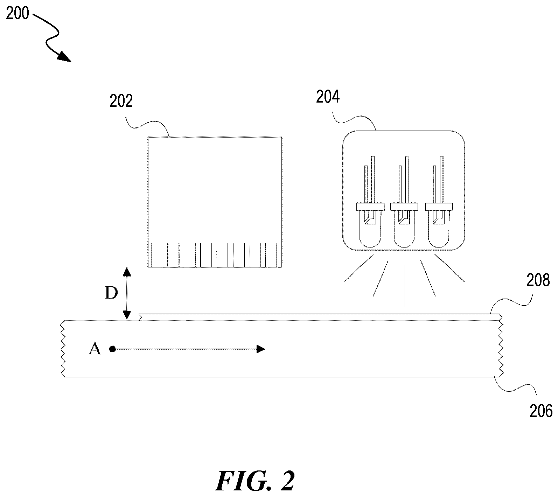

Figure 2 is a block diagram illustrating a side view of a printing system 200, including a printer head 202 and a light source 204, in accordance with one or more embodiments. In some examples, the printer head 202 includes distinct ink/color stages, e.g., cyan, magenta, yellow, and black (CMYK), are deposited onto the surface of a substrate 206. Path A represents the media feed direction, e.g., the direction in which the substrate 206 travels during the printing process. Path D represents the distance between the printer head 202 and the surface of the substrate 206.

In some embodiments, a light source 204 cures some or all of the ink 208 deposited onto the substrate 206 by the printer head 202. In some examples, the light source 204 is configured to emit wavelengths of UV electromagnetic radiation of subtype V (UVV), subtype A (UVA), subtype B (UVB), subtype C (UVC), or any combination thereof. Generally, UVV wavelengths are those wavelengths measured between 395 nanometers (nm) and 445 nm, UVA wavelengths measure between 315 nm and 395 nm, UVB wavelengths measure between 280 nm and 315 nm, and UVC wavelengths measure between 100 nm and 280 nm. However, one skilled in the art will recognize these ranges are somewhat adjustable. For example, some embodiments characterize wavelengths of 285 nm as UVC.

In some examples, the light source 204 is, for example, a fluorescent bulb, a light emitting diode (LED), a low-pressure, e.g., mercury (Hg), bulb, or an excited dimer (excimer) lamp/laser. Combinations of different light sources could be used in some embodiments. Generally, the light source 204 is selected to ensure that the curing temperature does not exceed the temperature at which the ink 208 begins to sublime. For example, a light source may be a UV LED lamp that generates low heat output and is used for a wider range of former types. UV LED lamps are associated with lower power consumption, longer lifetimes, and more predictable power output.

Alternatively, or additionally, other curing processes are also used, such as epoxy (resin) chemistries, flash curing, and electron beam technology. One skilled in the art will appreciate that many different curing processes could be adopted that utilize specific timeframes, intensities, rates, etc. In some embodiments, the intensity increases or decreases linearly or nonlinearly, e.g., exponentially, logarithmically. In some embodiments, the intensity is altered using a variable resistor or alternatively by applying a pulse-width-modulated (PWM) signal to the diodes in the case of an LED light source. In some examples, the light is modulated using amplitude modulation, polarization modulation, frequency modulation (e.g., as in wavelength-division multiplexing (WDM)), phase modulation (e.g., angle phase control), temporal modulation, and/or the like.

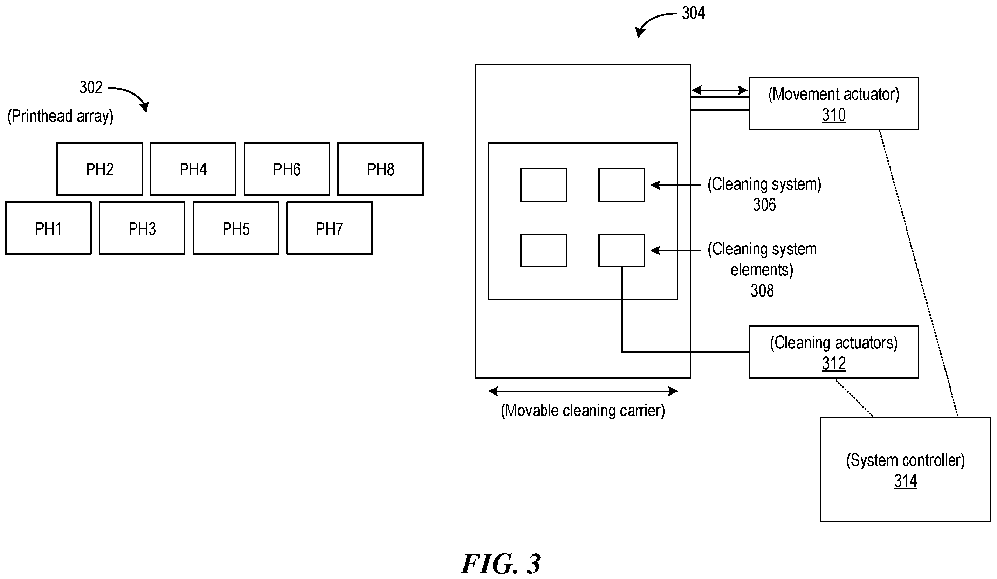

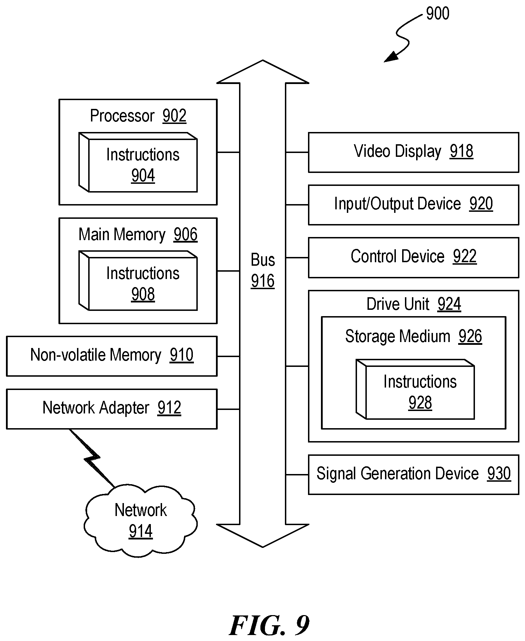

Some embodiments can be understood with reference to Figure 3. Figure 3 is a schematic diagram of an example environment of a printhead array and a movable carrier system to perform cleaning operations, according to an embodiment. The components of the environment 300 shown in Figure 3 include printhead array 302, cleaning carrier 304, cleaning system 306, system elements 308, movement actuator 310, cleaning actuators 312, and system controller 314. Additional components of the environment 300 include components of the computer system 900 illustrated and described in more detail with reference to Figure 9 and/or components of the printing system 100 illustrated and described in more detail with reference to Figure 1. Likewise, other embodiments include different and/or additional components, or be connected in a different way.

The printhead array 302 includes multiple printheads (PH1, PH2, PH3, etc.) arranged in a specific configuration to facilitate printing operations. Each printhead in the array is responsible for ejecting ink or other printing materials onto a substrate to create images or text. The printhead array 302 is designed to provide high-resolution printing by controlling the placement of ink droplets. Each printhead contains a set of nozzles that can eject tiny droplets of ink at high speed, allowing for detailed and accurate printing. In some embodiments, the printhead array 302 can be configured in various geometries (linear, staggered, etc.) depending on the printing requirements. The printhead array 302 can also include different types of printheads, such as thermal, piezoelectric, or continuous inkjet printheads. Thermal printheads use heat to create a bubble that forces ink out of the nozzle, while piezoelectric printheads use a piezoelectric crystal that changes shape when an electric field is applied, ejecting the ink. Continuous inkjet printheads, on the other hand, continuously eject ink droplets, and are directed to the substrate or deflected into a recycling system.

The cleaning carrier 304 is a movable platform that carries the cleaning system across the printhead array 302. The cleaning carrier 304 moves along the printhead array 302 to perform cleaning operations on the nozzles to monitor performance and/or prevent clogging. The cleaning carrier 304 traverses the length of the printhead array 302 to clean each nozzle in the set of nozzles. The cleaning carrier 304 can move in a linear fashion or follow a specific path dictated by the system controller 314. In some embodiments, the cleaning carrier 304 can be designed with different movement mechanisms, such as linear actuators, robotic arms, or conveyor belts. Linear actuators provide control over the movement of the cleaning carrier 304, while robotic arms can offer flexibility in reaching different parts of the printhead array 302. Conveyor belts can be used for continuous movement across the printhead array 302. The cleaning carrier 304 can be equipped with sensors to detect the cleaning carrier 304's position relative to the printheads.

The cleaning system 306 includes various elements and mechanisms to clean the printhead nozzles. The cleaning system 306 performs cleaning actions such as wiping, suction, and/or applying cleaning fluids to remove debris and maintain nozzle health. The cleaning system 306 can be used to prevent clogs and ensure consistent print quality. The cleaning system 306 can include a combination of mechanical and fluidic cleaning methods to remove ink residues and other contaminants from the nozzles. In some embodiments, the cleaning system 306 includes ultrasonic cleaners, air blowers, or specialized cleaning fluids. Ultrasonic cleaners use high-frequency sound waves to create cavitation bubbles in a cleaning solution, which can dislodge particles from the nozzles. Air blowers can use compressed air to blow away debris, while specialized cleaning fluids can dissolve ink residues. Additionally, the printheads and the ink delivery system can be operated to help with the cleaning action. Possible actions include tickling (actuating the nozzles without ejecting drops), weeping (reducing the vacuum level to induce ink dripping from the printheads), spitting (jetting drops from the nozzles), and/or reversing the flow direction across the printhead. The cleaning system 306 can be integrated with one or more automated diagnostic tools to assess the effectiveness of the cleaning process.

The system elements 308 are the individual components within the cleaning system 306 that perform specific cleaning tasks. The system elements 308 can include brushes, wipers, suction heads, and fluid applicators that directly interact with the printhead nozzles. Each of the elements can address different types of contaminants and ensure comprehensive cleaning. Brushes can physically scrub the nozzle plate to remove dried ink. Wipers can sweep across the nozzles to clear away any loose particles. Suction heads can create a vacuum to draw out any debris from the nozzles, and fluid applicators can dispense cleaning solutions to dissolve and wash away ink residues. In some embodiments, system elements 308 can be modular, allowing for the replacement or customization based on the type of printhead and the nature of the contaminants. The system elements 308 can be equipped with sensors to monitor the system elements' 308 condition and performance.

The movement actuator 310 is a device that controls the motion of the cleaning carrier 304 along the printhead array 302. The movement actuator 310 allows the cleaning carrier 304 to target specific areas of the printhead array 302 for cleaning. The movement actuator 310 can be configured to move the cleaning carrier 304 at varying speeds and follow linear or nonlinear paths. In some embodiments, movement actuators 310 can be electric motors, pneumatic cylinders, or hydraulic systems. The movement actuator 310 can be integrated with feedback systems such as encoders or linear scales for accurate positioning to ensure that the cleaning carrier 304 moves as expected by the cleaning process.

The cleaning actuators 312 control the actions of the cleaning system elements 308. The cleaning actuators 312 enable the cleaning system elements 308 to perform particular cleaning tasks, such as moving brushes or activating suction heads. The cleaning actuators 312 can be solenoids (e.g., to move wipers or brushes), stepper motors (e.g., for rotational or linear movement), or piezoelectric actuators (e.g., for delicate cleaning tasks). The cleaning actuators 312 can also be synchronized with the movement actuator 310 to perform coordinated cleaning actions.

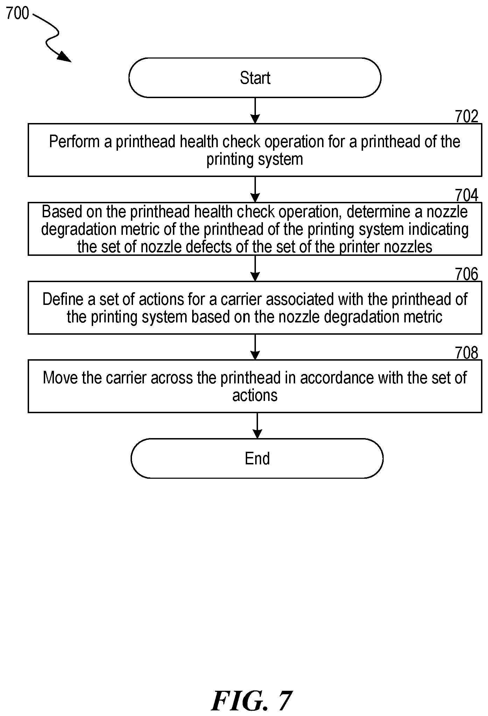

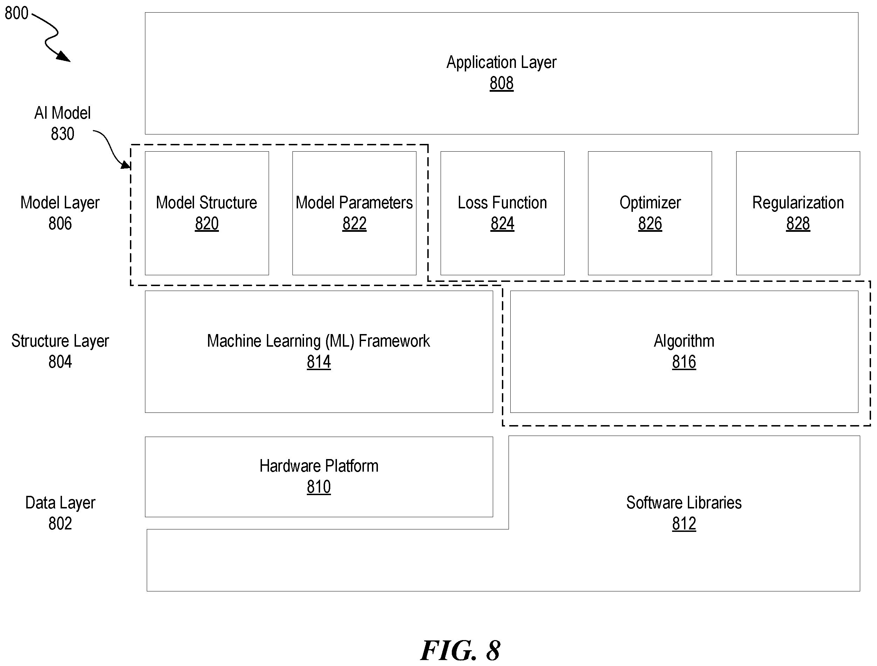

The system controller 314 is the central processing unit that manages the overall operation of the cleaning system 306. The system controller 314 coordinates the actions of the movement actuator 310 and cleaning actuators 312, processes sensor data, and executes cleaning algorithms. The system controller 314 can adjust the actions of the various components as needed. In some embodiments, the system controller 314 can be integrated with machine learning algorithms to improve cleaning strategies based on real-time data. Examples of the machine learning algorithms are discussed with reference to Figure 7 and Figure 8.

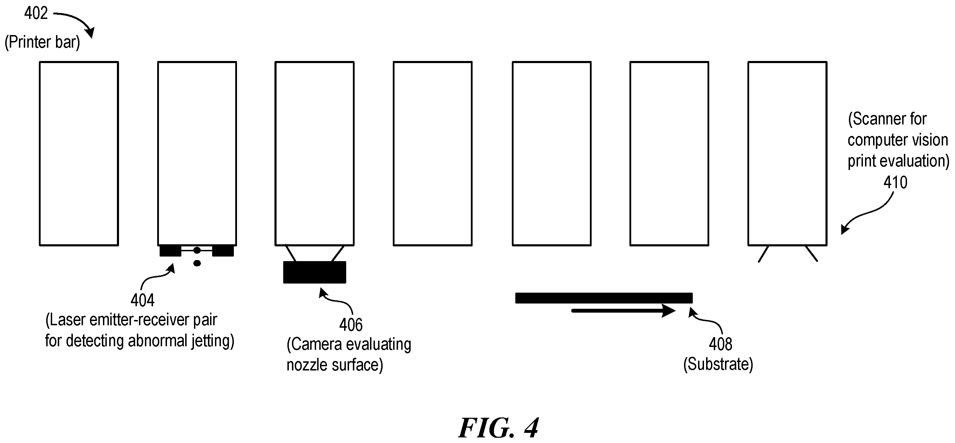

Some embodiments can be understood with reference to Figure 4. Figure 4 is schematic diagram of a front view of a single pass inkjet printer 400, according to an embodiment. Figure 4 shows different methods for printing quality or printhead nozzle health evaluation. The components of the single pass inkjet printer 400 shown in Figure 4 include printer bar 402, receiver pair 404, camera 406, substrate 408, and/or scanner 410. Additional components of the single pass inkjet printer 400 include components of the computer system 900 illustrated and described in more detail with reference to Figure 9 and/or components of the printing system 100 illustrated and described in more detail with reference to Figure 1. Likewise, other embodiments include different and/or additional components, or be connected in a different way.

The printer bar 402 is a structural component that holds one or more printheads in a fixed position relative to the substrate 408. The printer bar 402 ensures that the printheads are aligned correctly for printing operations and provides a stable platform for the printheads. The printer bar 402 can be made of a rigid material to maintain alignment and prevent any movement that could affect print quality. In some embodiments, the printer bar 402 can be adjustable, allowing for fine-tuning of printhead positions. Additionally, the printer bar 402 can be integrated with sensors to monitor printhead alignment continuously to correct deviations and maintain print quality.

In some embodiments, printing quality or printhead nozzle health evaluation uses laser emitter-receiver pair 404, which includes a laser emitter and a corresponding receiver that work together to detect abnormalities in the jetting of ink from the printheads. The laser emitter sends a beam across the path of the ink jets, and the receiver detects any interruptions or deviations in the beam, indicating potential issues with the printhead nozzles. In some embodiments, instead of a laser, other types of light sources such as LEDs are used. In some embodiments, multiple emitter-receiver pairs are used to cover a larger area or to increase detection accuracy.

In some embodiments, printing quality or printhead nozzle health evaluation uses the camera 406 to visually inspect the surface of the printhead nozzles. The camera 406 captures high-resolution images of the nozzle surface to identify clogs, debris, or other defects that could affect print quality. The camera 406 can be positioned to have a clear view of the nozzle plate, allowing the camera 406 to capture images that can be analyzed for any signs of wear or contamination. In some embodiments, a multi-camera system with multiple cameras 406 can be used to provide different viewing angles.

The substrate 408 is the material onto which the ink is printed. The substrate 408 can be paper, plastic, fabric, or any other printable surface. The substrate 408 serves as the medium for the final printed product and interacts with the printheads during the printing process. Different materials for the substrate can have different properties that influence ink adhesion and drying times. In some embodiments, different types of substrates can be used depending on the application, such as glossy paper for high-quality images or textiles for fabric printing. The substrate 408 can be pre-treated to enhance ink adhesion and print quality to ensure that the printed images are sharp and vibrant.

In some embodiments, printing quality or printhead nozzle health evaluation uses the scanner 410 and computer vision technology to evaluate the quality of the printed output. The scanner 410 scans the printed substrate 408 to detect defects such as misalignment, color inconsistencies, or missing ink. The data collected by the scanner 410 is used to assess the performance of the printheads and to make necessary adjustments. In some embodiments, the scanner 410 includes spectral analysis for color accuracy. Spectral analysis can provide detailed information about the color properties of the printed output, ensuring that the colors are accurate and consistent.

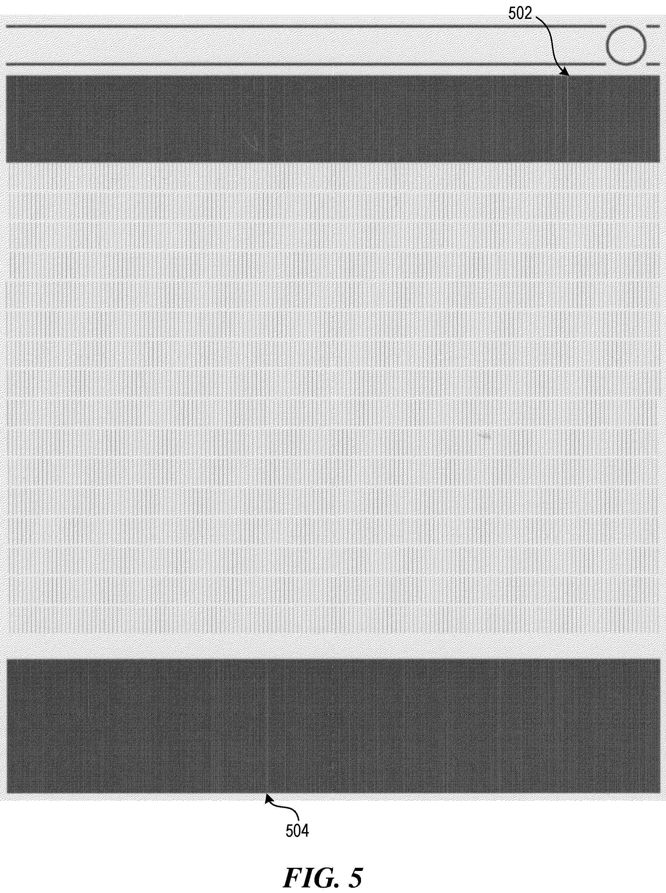

Some embodiments can be understood with reference to Figure 5. Figure 5 shows a printed image 500 processed to evaluate printhead nozzle health using human or computer vision techniques, according to an embodiment. The components of the printed image 500 shown in Figure 5 include nozzle defects 502, 504.

The nozzle defects 502 refer to any issues with the printhead nozzles that can affect print quality. Common defects include clogging, misalignment, or damage to the nozzle. The nozzle defects 502 can lead to poor print quality, such as streaks, missing lines, or inconsistent colors. In some embodiments, nozzle defects 502 can be detected using various methods, such as visual inspection, acoustic sensing, or electrical impedance measurements. Visual inspection can include capturing high-resolution images of the nozzle surface and analyzing them for signs of clogging or damage. Acoustic sensing can use sound waves to detect blockages or irregularities in the nozzles, while electrical impedance measurements can identify changes in the electrical properties of the nozzles that indicate defects. In some embodiments, the nozzle defects 502 can include partial clogs, where the nozzle is not completely blocked but is still restricted, leading to reduced ink flow and print quality.

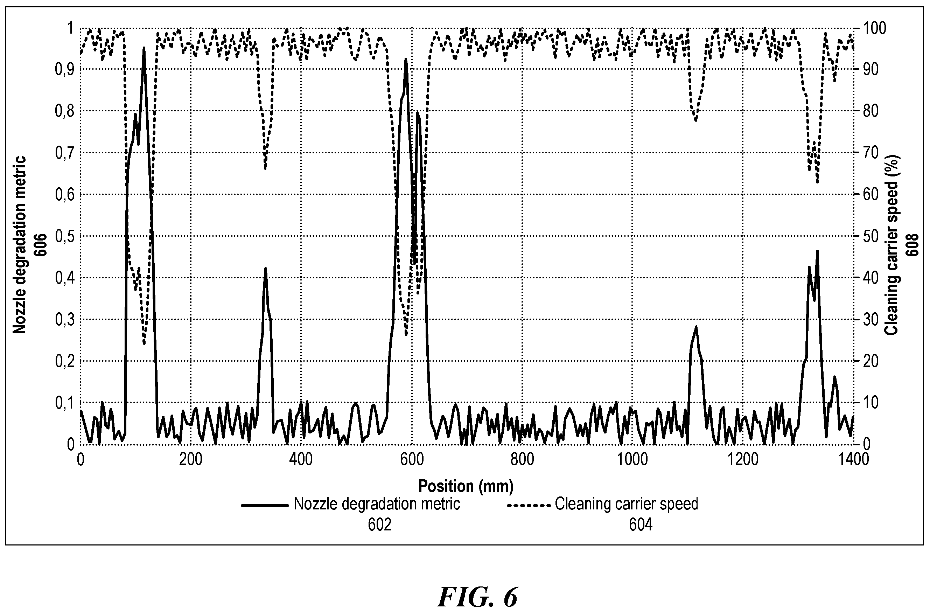

Some embodiments can be understood with reference to Figure 6. Figure 6 is a graph 600 showing a possible relationship between nozzle degradation metric values versus cleaning system speeds, according to an embodiment. The components of the graph 600 shown in Figure 6 include nozzle degradation metric 602, cleaning carrier speed 604, nozzle degradation metric values 606, and cleaning carrier speed metric values 608. Additional components of the graph 600 include components of the computer system 900 illustrated and described in more detail with reference to Figure 9. Likewise, other embodiments include different and/or additional components, or be connected in a different way.

The nozzle degradation metric 602 is a quantitative measure of the health or performance of the nozzles in a printhead. The nozzle degradation metric 602 indicates the extent to which the nozzles are clogged, misfiring, or otherwise degraded, and used for determining the appropriate cleaning actions needed to restore the nozzles to optimal condition. The nozzle degradation metric 602 can be derived from various sources, such as optical scanning, jetting performance analysis, and electrical measurements. In some embodiments, optical scanning involves using cameras or scanners to visually inspect the nozzles and detect blockages or misalignments. Jetting performance analysis monitors the ink ejection patterns and volumes to identify inconsistencies, while electrical measurements assess the electrical characteristics of the nozzles to detect anomalies.

The cleaning carrier speed 604 is the velocity at which the cleaning mechanism (i.e., carrier) moves across the printhead to perform the cleaning operation. The speed of the cleaning carrier ensures effective cleaning while lowering the time and resources used. The cleaning carrier speed 604 can be adjusted based on the nozzle degradation metric to increase the efficiency the cleaning process. In some embodiments, the speed can be fixed, meaning it remains constant regardless of the nozzle condition. In some embodiments, the speed can be variable, adjusting dynamically based on the nozzle degradation metric to provide more intensive cleaning for highly degraded areas and faster cleaning for less affected areas. Here, the direction of motion is constant.

The nozzle degradation metric values 606 represent specific measurements or levels of nozzle degradation. The nozzle degradation metric values 606 in Figure 6 are plotted on the graph to show the extent of degradation at different positions along the printhead. The nozzle degradation metric values 606 provide a map of the nozzle condition, allowing for targeted cleaning actions. In some embodiments, the nozzle degradation metric values 606 can be represented in various forms, such as percentages, numerical scores, or categorical classifications. Percentages indicate the proportion of nozzles affected, numerical scores provide a quantitative measure based on a predefined scale, and categorical classifications group the degradation into categories like low, medium, and high.

The cleaning carrier speed metric values 608 indicate the speed of the cleaning carrier at different positions along the printhead, corresponding to the nozzle degradation metric values. The cleaning carrier speed metric values 608 ensure that the cleaning carrier moves at the appropriate speed to effectively clean the nozzles based on their condition. In some embodiments, the cleaning carrier speed metric values 608 can be expressed in various forms, such as percentages, absolute speed units, or adaptive speed adjustments. Percentages represent the speed relative to a maximum speed, absolute speed units provide specific measurements in units like mm/s or inches/s, and adaptive speed adjustments allow for real-time changes based on feedback from sensors.

Some embodiments can be understood with reference to Figure 7. Figure 7 is a flow diagram for performing a cleaning operation, according to an embodiment. In some embodiments, the process of Figure 7 is performed using a printing system, e.g., the printing system of environment 300 illustrated and described in more detail with reference to Figure 3. In other embodiments, the process of Figure 7 is performed using components of the computer system 900 illustrated and described in more detail with reference to Figure 9. Likewise, other embodiments include different and/or additional steps, or are performed in a different order.

In step 702, the printing system performs a printhead health check operation for a printhead of the printing system. The printhead health check operation includes identifying and recording a set of nozzle defects of a set of printer nozzles arranged within the printhead. The nozzle defects of the set of nozzle defects include clogs, misfires, and/or inconsistencies of the set of printer nozzles within the printhead. The health check can be conducted using various methods. The identification and recordation of the nozzle defects can include identifying and recording a frequency, a severity, and/or a location of the nozzle defects within the printer nozzles.

The printhead health check operation includes, in some embodiments, evaluating a printed template using one or more camera sensors of the printing system. In some embodiments, the printhead health check operation includes capturing and analyzing printed test patterns using an optical sensor or imaging device associated with the printing system. The optical sensor or the imaging device can be configured to detect any deviations or defects in a printed output printed using the printhead. Based on the evaluation, the printing system can identify a cleanliness level of the printhead using a camera of the carrier pointing to a plate surface of one or more printer nozzles of the set of printer nozzles. For example, a high-resolution camera can capture images of a printed test pattern, and image processing software can analyze the images to detect missing or misaligned dots, which indicate nozzle defects.

The printhead health check operation includes, in some embodiments, detecting, using a laser emitter-receiver pair of the carrier, a set of nozzle outs in response to a beam of the laser emitter-receiver pair crossing an expected trajectory of a jetted drop of one or more printer nozzles of the set of printer nozzles of the printhead. The printing system can project a laser beam across the path of the ink droplets and detecting any interruptions in the beam to indicate a nozzle that is not firing correctly. For example, if the laser beam is interrupted, it suggests that the ink droplet is not being ejected properly, indicating a potential clog or misfire.

The printhead health check operation includes, in some embodiments, evaluating abnormal jetting using a nozzle actuator of the carrier. For example, the printing system can monitor the electrical signals and mechanical movements of the nozzle actuators to detect any irregularities in their operation. For instance, piezoelectric sensors can measure the vibrations of the nozzle actuators, identifying any deviations from normal operation that could indicate a defect.

In step 704, based on the printhead health check operation, determine a set of nozzle degradation metric values of the printhead of the printing system indicating the set of nozzle defects of the set of the printer nozzles. The set of nozzle degradation metric values are associated with a health status of the printhead nozzles. The set of nozzle degradation metric values can indicate, for example, a number of defective nozzles per unit area, an average severity of defects across the printhead, and/or a distribution pattern of the nozzle defects within the printhead. The nozzle degradation metric values provide a quantitative measure of the printhead's condition. For example, a high concentration of defects in a specific area can indicate a need for more intensive cleaning in that region. The system can use the set of nozzle degradation metric values to prioritize cleaning actions and allocate resources effectively, ensuring that the most critical areas receive the necessary attention. For instance, if the degradation metric indicates that 20% of the nozzles in a particular section are clogged, the system can focus more cleaning efforts on that section.

In step 706, the printing system generates a set of actions for a carrier associated with the printhead of the printing system based on the set of nozzle degradation metric values. The carrier is a movable carriage affixed to a base of the printing system and equipped with a cleaning device configured to clean the printhead. The set of actions adjust at least one parameter of the carrier. The movement of the carrier can be controlled by an actuator and an actuator controller.

To translate the nozzle degradation metric into actionable cleaning steps the printing system can use predetermined mapped actions or one or more models discussed with reference to Figure 8. For example, the system collects data on nozzle performance, including the frequency, severity, and location of defects, as well as the effectiveness of various cleaning actions. The data is input into an artificial intelligence (e.g., machine learning) model trained to recognize patterns and correlations between nozzle degradation metrics and successful cleaning strategies. The machine learning model used can be a supervised learning model, such as a neural network, decision tree, or support vector machine. In the training phase, the machine learning model is provided with labeled training data, where the input features include nozzle degradation metrics (e.g., number of defective nozzles per unit area, average severity of defects, distribution pattern of defects) and the corresponding cleaning actions (e.g., carrier speed, motion profile, vacuum level, wiper pressure) that were previously applied. The output labels are the effectiveness of the cleaning actions, measured by the improvement in nozzle performance post-cleaning. The model learns to map the input features to the output labels, identifying one or more cleaning actions for different degradation scenarios.

Once trained, the ML model can construct the set of actions for any given nozzle degradation metric. When a new health check is performed, the system inputs the degradation metrics into the model. The input features for the model include the current nozzle degradation metrics, such as the number of defective nozzles per unit area, the average severity of defects, and the distribution pattern of defects within the printhead. The model processes these inputs through its learned parameters and outputs a custom cleaning plan. The output of the model can include specific adjustments to the carrier's speed, motion profile, vacuum level, and wiper pressure. For example, the model can output a recommendation to slow down the carrier speed to 0.5 cm/s in areas with a high concentration of clogs, increase the vacuum level to -80 kPa, and apply a higher contact pressure with the wipers.

In some embodiments, the printing system continuously updates the model with new data from each cleaning cycle, allowing the model to refine its predictions and improve cleaning efficiency over time. For example, the printing system can collect post-cleaning performance data, such as the reduction in nozzle defects and the improvement in print quality, and feeding the data back into the model for further training. For example, if the printing system detects that a particular cleaning action was highly effective in removing clogs in a specific area, the printing system will assign a higher weight to the action in similar future scenarios. Conversely, if a cleaning action was less effective, the model will adjust its parameters to avoid recommending that action in similar situations.

The set of actions can include adjusting a speed of the carrier based on a concentration of the nozzle defects within a particular location of the printhead. For instance, the carrier can move more slowly over areas with a high concentration of defects to allow for more thorough cleaning. In some embodiments, the set of actions can include modifying a motion profile of the carrier based on the concentration of the nozzle defects within the particular location of the printhead. This may involve changing the path or pattern of the carrier's movement to ensure that all affected areas are adequately cleaned. For example, the carrier might follow a zigzag pattern over heavily contaminated areas to ensure multiple passes. In some embodiments, the set of actions can include modifying a vacuum level of vacuum pads equipped on the carrier or a contact pressure of wipers equipped on the carrier based on the concentration of the nozzle defects within the particular location. Higher vacuum levels or increased contact pressure may be necessary in areas with more severe contamination to ensure effective cleaning. For instance, the system can increase the vacuum level to -80 kPa in areas with heavy clogging, compared to -40 kPa in less affected areas.

In step 708, the printing system moves the carrier across the printhead in accordance with the set of actions. The adjusted at least one parameter of the carrier can include adjusting a speed of the carrier moving across the printhead. The speed of the carrier can be adjusted to increase in response to a greater concentration of the nozzle defects in a particular location. This ensures that the carrier spends more time cleaning areas with more significant issues. For example, the carrier can slow down to 0.5 cm/s in heavily contaminated areas and speed up to 2 cm/s in cleaner areas. The adjusted parameter can include a motion profile of the carrier based on a distribution pattern of the nozzle defects within the printhead. Modifying the motion profile of the carrier based on the distribution pattern of nozzle defects allows for targeted cleaning, ensuring that all affected areas are addressed. In some embodiments, the adjusted parameter includes a vacuum level of cleaning devices. Adjusting the vacuum level of cleaning devices to increase in response to a greater concentration of nozzle defects ensures that the cleaning action is strong enough to remove stubborn contaminants. The vacuum level of the carrier can be adjusted to increase in response to the greater concentration of the nozzle defects in the particular location. In some embodiments, the adjusted parameter can include a contact pressure of wipers equipped on the carrier. Adjusting the contact pressure of wipers to increase in response to a greater concentration of nozzle defects ensures that the wipers can effectively remove debris from the nozzle plate surface.

In some embodiments, moving the carrier with the adjusted at least one parameter across the printhead includes using a wiper to remove material from a plate surface of one or more printer nozzles of the set of printer nozzles. The printing system can apply a vacuum pad to detach particles from the plate surface of the one or more printer nozzles. The printing system can project a flushing fluid onto the plate surface to clear one or more nozzle defects of the nozzle defects. For example, a high-pressure flushing fluid might be used to dislodge stubborn clogs, while a vacuum pad can remove the dislodged particles.

### Example Embodiments of Models Used for Localized Printhead Cleaning

Figure 8 is a block diagram illustrating an example artificial intelligence (AI) system 800, in accordance with one or more implementations of this disclosure. The Al system 800 is implemented using components of the example computer system 900 illustrated and described in more detail with reference to Figure 9. For example, the Al system 800 can be implemented using the processor 902 and instructions 908 programmed in the memory 906 illustrated and described in more detail with reference to Figure 9. Likewise, implementations of the Al system 800 can include different and/or additional components or be connected in different ways.

As shown, the Al system 800 can include a set of layers, which conceptually organize elements within an example network topology for the Al system's architecture to implement a particular Al model 830. Generally, an Al model 830 is a computer-executable program implemented by the Al system 800 that analyzes data to make predictions. Information can pass through each layer of the Al system 800 to generate outputs for the Al model 830. The layers can include a data layer 802, a structure layer 804, a model layer 806, and an application layer 808. The algorithm 816 of the structure layer 804 and the model structure 820 and model parameters 822 of the model layer 806 together form the example Al model 830. The optimizer 826, loss function engine 824, and regularization engine 828 work to refine and optimize the Al model 830, and the data layer 802 provides resources and support for application of the Al model 830 by the application layer 808.

The data layer 802 acts as the foundation of the Al system 800 by preparing data for the Al model 830. As shown, the data layer 802 can include two sub-layers: a hardware platform 810 and one or more software libraries 812. The hardware platform 810 can be designed to perform operations for the Al model 830 and include computing resources for storage, memory, logic, and networking, such as the resources described in relation to Figure 9. The hardware platform 810 can process amounts of data using one or more servers. The servers can perform backend operations such as matrix calculations, parallel calculations, machine learning (ML) training, and the like. Examples of servers used by the hardware platform 810 include central processing units (CPUs) and graphics processing units (GPUs). CPUs are electronic circuitry designed to execute instructions for computer programs, such as arithmetic, logic, controlling, and input/output (I/O) operations, and can be implemented on integrated circuit (IC) microprocessors. GPUs are electric circuits that were originally designed for graphics manipulation and output but can be used for Al applications due to their vast computing and memory resources. GPUs use a parallel structure that generally makes their processing more efficient than that of CPUs. In some instances, the hardware platform 810 can include Infrastructure as a Service (laaS) resources, which are computing resources, (e.g., servers, memory, etc.) offered by a cloud services provider. The hardware platform 810 can also include computer memory for storing data about the Al model 830, application of the Al model 830, and training data for the Al model 830. The computer memory can be a form of random-access memory (RAM), such as dynamic RAM, static RAM, and non-volatile RAM.

The software libraries 812 can be thought of as suites of data and programming code, including executables, used to control the computing resources of the hardware platform 810. The programming code can include low-level primitives (e.g., fundamental language elements) that form the foundation of one or more low-level programming languages, such that servers of the hardware platform 810 can use the low-level primitives to carry out specific operations. The low-level programming languages do not require much, if any, abstraction from a computing resource's instruction set architecture, allowing them to run quickly with a small memory footprint. Examples of software libraries 812 that can be included in the Al system 800 include Intel Math Kernel Library, Nvidia cuDNN, Eigen, and Open BLAS.

The structure layer 804 can include a machine learning (ML) framework 814 and an algorithm 816. The ML framework 814 can be thought of as an interface, library, or tool that allows users to build and deploy the Al model 830. The ML framework 814 can include an open-source library, an application programming interface (API), a gradient-boosting library, an ensemble method, and/or a deep learning toolkit that work with the layers of the Al system facilitate development of the Al model 830. For example, the ML framework 814 can distribute processes for application or training of the Al model 830 across multiple resources in the hardware platform 810. The ML framework 814 can also include a set of pre-built components that have the functionality to implement and train the Al model 830 and allow users to use pre-built functions and classes to construct and train the Al model 830. Thus, the ML framework 814 can be used to facilitate data engineering, development, hyperparameter tuning, testing, and training for the Al model 830.

Examples of ML frameworks 814 or libraries that can be used in the Al system 800 include TensorFlow, PyTorch, Scikit-Learn, Keras, and Cafffe. Random Forest is a machine learning algorithm that can be used within the ML frameworks 814. LightGBM is a gradient boosting framework/algorithm (an ML technique) that can be used. Other techniques/algorithms that can be used are XGBoost, CatBoost, etc. Amazon Web Services is a cloud service provider that offers various machine learning services and tools (e.g., Sage Maker) that can be used for platform building, training, and deploying ML models.

In some implementations, the ML framework 814 performs deep learning (also known as deep structured learning or hierarchical learning) directly on the input data to learn data representations, as opposed to using task-specific algorithms. In deep learning, no explicit feature extraction is performed; the features of feature vector are implicitly extracted by the Al system 800. For example, the ML framework 814 can use a cascade of multiple layers of nonlinear processing units for implicit feature extraction and transformation. Each successive layer uses the output from the previous layer as input. The Al model 830 can thus learn in supervised (e.g., classification) and/or unsupervised (e.g., pattern analysis) modes. The Al model 830 can learn multiple levels of representations that correspond to different levels of abstraction, wherein the different levels form a hierarchy of concepts. In this manner, Al model 830 can be configured to differentiate features of interest from background features.

The algorithm 816 can be an organized set of computer-executable operations used to generate output data from a set of input data and can be described using pseudocode. The algorithm 816 can include complex code that allows the computing resources to learn from new input data and create new/modified outputs based on what was learned. In some implementations, the algorithm 816 can build the Al model 830 through being trained while running computing resources of the hardware platform 810. This training allows the algorithm 816 to make predictions or decisions without being explicitly programmed to do so. Once trained, the algorithm 816 can run at the computing resources as part of the Al model 830 to make predictions or decisions, improve computing resource performance, or perform tasks. The algorithm 816 can be trained using supervised learning, unsupervised learning, semi-supervised learning, and/or reinforcement learning.

Using supervised learning, the algorithm 816 can be trained to learn patterns (e.g., map input data to output data) based on labeled training data. The training data can be labeled by an external user or operator. For instance, a user can collect a set of training data, such as by capturing application and/or service usage patterns, metadata, historical communication sessions, and the like (detailed further in Figure 5 and Figure 6). The user can label the training data based on one or more classes and trains the Al model 830 by inputting the training data to the algorithm 816. The algorithm determines how to label the new data based on the labeled training data. The user can facilitate collection, labeling, and/or input via the ML framework 814. In some instances, the user can convert the training data to a set of feature vectors for input to the algorithm 816. Once trained, the user can test the algorithm 816 on new data to determine if the algorithm 816 is predicting accurate labels for the new data. For example, the user can use cross-validation methods to test the accuracy of the algorithm 816 and retrain the algorithm 816 on new training data if the results of the cross-validation are below an accuracy threshold.

Supervised learning can involve classification and/or regression. Classification techniques involve teaching the algorithm 816 to identify a category of new observations based on training data and are used when input data for the algorithm 816 is discrete. Said differently, when learning through classification techniques, the algorithm 816 receives training data labeled with categories (e.g., classes) and determines how features observed in the training data (e.g., features of data of Figure 5 and Figure 6 such as frequency of data transmissions, duration of data sessions, volume of data exchanges, timing of data bursts) relate to the categories (e.g., services and applications). Once trained, the algorithm 816 can categorize new data by analyzing the new data for features that map to the categories. Examples of classification techniques include boosting, decision tree learning, genetic programming, learning vector quantization, k-nearest neighbor (k-NN) algorithm, and statistical classification.

Regression techniques involve estimating relationships between independent and dependent variables and are used when input data to the algorithm 816 is continuous. Regression techniques can be used to train the algorithm 816 to predict or forecast relationships between variables. To train the algorithm 816 using regression techniques, a user can select a regression method for estimating the parameters of the model. The user collects and labels training data that is input to the algorithm 816 such that the algorithm 816 is trained to understand the relationship between data features and the dependent variable(s). Once trained, the algorithm 816 can predict missing historic data or future outcomes based on input data. Examples of regression methods include linear regression, multiple linear regression, logistic regression, regression tree analysis, least squares method, and gradient descent. In an example implementation, regression techniques can be used, for example, to estimate and fill-in missing data for machine-learning based pre-processing operations.

Under unsupervised learning, the algorithm 816 learns patterns from unlabeled training data. In particular, the algorithm 816 is trained to learn hidden patterns and insights of input data, which can be used for data exploration or for generating new data. Here, the algorithm 816 does not have a predefined output, unlike the labels output when the algorithm 816 is trained using supervised learning. Another way unsupervised learning is used to train the algorithm 816 to find an underlying structure of a set of data is to group the data according to similarities and represent that set of data in a compressed format. The wireless communication system 400 disclosed herein can use unsupervised learning to identify patterns in data received.

A few techniques can be used in supervised learning: clustering, anomaly detection, and techniques for learning latent variable models. Clustering techniques involve grouping data into different clusters that include similar data, such that other clusters contain dissimilar data. For example, during clustering, data with possible similarities remain in a group that has less or no similarities to another group. Examples of clustering techniques density-based methods, hierarchical based methods, partitioning methods, and grid-based methods. In one example, the algorithm 816 can be trained to be a k-means clustering algorithm, which partitions n observations in k clusters such that each observation belongs to the cluster with the nearest mean serving as a prototype of the cluster. Anomaly detection techniques are used to detect previously unseen rare objects or events represented in data without prior knowledge of these objects or events. Anomalies can include data that occur rarely in a set, a deviation from other observations, outliers that are inconsistent with the rest of the data, patterns that do not conform to well-defined normal behavior, and the like. When using anomaly detection techniques, the algorithm 816 can be trained to be an Isolation Forest, local outlier factor (LOF) algorithm, or K-nearest neighbor (k-NN) algorithm. Latent variable techniques involve relating observable variables to a set of latent variables. These techniques assume that the observable variables are the result of an individual's position on the latent variables and that the observable variables have nothing in common after controlling for the latent variables. Examples of latent variable techniques that can be used by the algorithm 816 include factor analysis, item response theory, latent profile analysis, and latent class analysis.

In some implementations, the Al system 800 trains the algorithm 816 of Al model 830, based on the training data, to correlate the feature vector to expected outputs in the training data. As part of the training of the Al model 830, the Al system 800 forms a training set of features and training labels by identifying a positive training set of features that have been determined to have a desired property in question, and, in some implementations, forms a negative training set of features that lack the property in question. The Al system 800 applies ML framework 814 to train the Al model 830, that when applied to the feature vector, outputs indications of whether the feature vector has an associated desired property or properties, such as a probability that the feature vector has a particular Boolean property, or an estimated value of a scalar property. The Al system 800 can further apply dimensionality reduction (e.g., via linear discriminant analysis (LDA), PCA, or the like) to reduce the amount of data in the feature vector to a smaller, more representative set of data.

The model layer 806 implements the Al model 830 using data from the data layer and the algorithm 816 and ML framework 814 from the structure layer 804, thus enabling decision-making capabilities of the Al system 800. The model layer 806 includes a model structure 820, model parameters 822, a loss function engine 824, an optimizer 826, and a regularization engine 828.

The model structure 820 describes the architecture of the Al model 830 of the Al system 800. The model structure 820 defines the complexity of the pattern/relationship that the Al model 830 expresses. Examples of structures that can be used as the model structure 820 include decision trees, support vector machines, regression analyses, Bayesian networks, Gaussian processes, genetic algorithms, and artificial neural networks (or, simply, neural networks). The model structure 820 can include a number of structure layers, a number of nodes (or neurons) at each structure layer, and activation functions of each node. Each node's activation function defines how to node converts data received to data output. The structure layers can include an input layer of nodes that receive input data, an output layer of nodes that produce output data. The model structure 820 can include one or more hidden layers of nodes between the input and output layers. The model structure 820 can be an Artificial Neural Network (or, simply, neural network) that connects the nodes in the structured layers such that the nodes are interconnected. Examples of neural networks include Feedforward Neural Networks, convolutional neural networks (CNNs), Recurrent Neural Networks (RNNs), Autoencoder, and Generative Adversarial Networks (GANs).

The model parameters 822 represent the relationships learned during training and can be used to make predictions and decisions based on input data. The model parameters 822 can weight and bias the nodes and connections of the model structure 820. For instance, when the model structure 820 is a neural network, the model parameters 822 can weight and bias the nodes in each layer of the neural networks, such that the weights determine the strength of the nodes and the biases determine the thresholds for the activation functions of each node. The model parameters 822, in conjunction with the activation functions of the nodes, determine how input data is transformed into desired outputs. The model parameters 822 can be determined and/or altered during training of the algorithm 816.

The loss function engine 824 can determine a loss function, which is a metric used to evaluate the Al model's 830 performance during training. For instance, the loss function engine 824 can measure the difference between a predicted output of the Al model 830 and the actual output of the Al model 830 and is used to guide optimization of the Al model 830 during training to minimize the loss function. The loss function can be presented via the ML framework 814, such that a user can determine whether to retrain or otherwise alter the algorithm 816 if the loss function is over a threshold. In some instances, the algorithm 816 can be retrained automatically if the loss function is over the threshold. Examples of loss functions include a binary-cross entropy function, hinge loss function, regression loss function (e.g., mean square error, quadratic loss, etc.), mean absolute error function, smooth mean absolute error function, log-cosh loss function, and quantile loss function.

The optimizer 826 adjusts the model parameters 822 to minimize the loss function during training of the algorithm 816. In other words, the optimizer 826 uses the loss function generated by the loss function engine 824 as a guide to determine what model parameters lead to the most accurate Al model 830. Examples of optimizers include Gradient Descent (GD), Adaptive Gradient Algorithm (AdaGrad), Adaptive Moment Estimation (Adam), Root Mean Square Propagation (RMSprop), Radial Base Function (RBF) and Limited-memory BFGS (L-BFGS). The type of optimizer 826 used can be determined based on the type of model structure 820 and the size of data and the computing resources available in the data layer 802.

The regularization engine 828 executes regularization operations. Regularization is a technique that prevents over- and under-fitting of the Al model 830. Overfitting occurs when the algorithm 816 is overly complex and too adapted to the training data, which can result in poor performance of the Al model 830. Underfitting occurs when the algorithm 816 is unable to recognize even basic patterns from the training data such that it cannot perform well on training data or on validation data. The regularization engine 828 can apply one or more regularization techniques to fit the algorithm 816 to the training data properly, which helps constraint the resulting Al model 830 and improves its ability for generalized application. Examples of regularization techniques include lasso (L1) regularization, ridge (L2) regularization, and elastic (L1 and L2 regularization).

In some implementations, the Al system 800 can include a feature extraction module implemented using components of the example computer system 900 illustrated and described in more detail with reference to Figure 9. In some implementations, the feature extraction module extracts a feature vector from input data. The feature vector includes n features (e.g., feature a, feature b, . . ., feature n). The feature extraction module reduces the redundancy in the input data, e.g., repetitive data values, to transform the input data into the reduced set of features such as feature vector. The feature vector contains the relevant information from the input data, such that events or data value thresholds of interest can be identified by the Al model 830 by using this reduced representation. In some example implementations, the following dimensionality reduction techniques are used by the feature extraction module: independent component analysis, Isomap, kernel principal component analysis (PCA), latent semantic analysis, partial least squares, PCA, multifactor dimensionality reduction, nonlinear dimensionality reduction, multilinear PCA, multilinear subspace learning, semidefinite embedding, autoencoder, and deep feature synthesis.

### Computer System

Figure 9 is a block diagram illustrating an example computer system 900, in accordance with one or more embodiments. In some examples, the computer system 900 includes one or more central processing units ("processors") 902, main memory 906, non-volatile memory 910, network adapter 912 (e.g., network interface), video display 918, input/output devices 920, control device 922 (e.g., keyboard and pointing devices), drive unit 924 including a storage medium 926, and a signal generation device 930 that are communicatively connected to a bus 916. The bus 916 is illustrated as an abstraction that represents one or more physical buses and/or point-to-point connections that are connected by appropriate bridges, adapters, or controllers. In some examples, the bus 916, therefore, includes a system bus, a Peripheral Component Interconnect (PCI) bus or PCI-Express bus, a HyperTransport or industry standard architecture (ISA) bus, a small computer system interface (SCSI) bus, a universal serial bus (USB), an IIC (12C) bus, or an Institute of Electrical and Electronics Engineers (IEEE) standard 1394 bus (also referred to as "Firewire").

In some examples, the computer system 900 shares a similar computer processor architecture as that of a desktop computer, tablet computer, personal digital assistant (PDA), mobile phone, game console, music player, wearable electronic device (e.g., a watch or fitness tracker), network-connected ("smart") device (e.g., a television or home assistant device), virtual/augmented reality system (e.g., a head-mounted display), or another electronic device capable of executing a set of instructions (sequential or otherwise) that specify action(s) to be taken by the computer system 900.

While the main memory 906, non-volatile memory 910, and storage medium 926 (also called a "machine-readable medium") are shown to be a single medium, the term "machine-readable medium" and "storage medium" should be taken to include a single medium or multiple media (e.g., a centralized/distributed database and/or associated caches and servers) that store one or more sets of instructions 928. The term "machine-readable medium" and "storage medium" shall also be taken to include any medium that is capable of storing, encoding, or carrying a set of instructions for execution by the computer system 900.

In general, the routines executed to implement the embodiments of the disclosure can be implemented as part of an operating system or a specific application, component, program, object, module, or sequence of instructions (collectively referred to as "computer programs"). The computer programs typically include one or more instructions (e.g., instructions 904, 908, 928) set at various times in various memory and storage devices in a computing device. When read and executed by the one or more processors 902, the instruction(s) cause the computer system 900 to perform operations to execute elements involving the various aspects of the disclosure.

Moreover, while embodiments have been described in the context of fully functioning computing devices, those skilled in the art will appreciate that the various embodiments are capable of being distributed as a program product in a variety of forms. The disclosure applies regardless of the particular type of machine or computer-readable media used to actually effect the distribution.

Further examples of machine-readable storage media, machine-readable media, or computer-readable media include recordable-type media such as volatile and non-volatile memory 910, floppy and other removable disks, hard disk drives, optical disks (e.g., Compact Disk Read-Only Memory (CD-ROMS), Digital Versatile Disks (DVDs)), and transmission-type media such as digital and analog communication links.

The network adapter 912 enables the computer system 900 to mediate data in a network 914 with an entity that is external to the computer system 900 through any communication protocol supported by the computer system 900 and the external entity. In some examples, the network adapter 912 includes a network adapter card, a wireless network interface card, a router, an access point, a wireless router, a switch, a multilayer switch, a protocol converter, a gateway, a bridge, a bridge router, a hub, a digital media receiver, and/or a repeater.

In some embodiments, the network adapter 912 includes a firewall that governs and/or manages permission to access/proxy data in a computer network and tracks varying levels of trust between different machines and/or applications. In some examples, the firewall is any number of modules having any combination of hardware and/or software components able to enforce a predetermined set of access rights between a particular set of machines and applications, machines and machines, and/or applications and applications (e.g., to regulate the flow of traffic and resource sharing between these entities). In some embodiments, the firewall additionally manages and/or has access to an access control list that details permissions including the access and operation rights of an object by an individual, a machine, and/or an application, and the circumstances under which the permission rights stand.

According to some embodiments, the techniques introduced here are implemented by programmable circuitry (e.g., one or more microprocessors), software and/or firmware, special-purpose hardwired (i.e., non-programmable) circuitry, or a combination of such forms. In some examples, special-purpose circuitry is in the form of one or more application-specific integrated circuits (ASICs), programmable logic devices (PLDs), field-programmable gate arrays (FPGAs), etc.

In the following, additional examples of the invention will be described which can be used individually or in combination with any of the features and functionalities and details described herein.
Example 1: A method for localized printhead cleaning of a printing system, comprising:
   performing a printhead health check operation for a printhead of the printing system, wherein the printhead health check operation includes identifying and recording a set of nozzle defects of a set of printer nozzles arranged within the printhead,
   wherein the nozzle defects of the set of nozzle defects include any of clogs, misfires, and inconsistencies of the set of printer nozzles within the printhead;
   based on the printhead health check operation, determining a set of nozzle degradation metric values of the printhead of the printing system indicating the set of nozzle defects of the set of the printer nozzles,
   wherein the set of nozzle degradation metric values is associated with a health status of the printhead nozzles;
   defining a set of actions for a carrier associated with the printhead of the printing system based on the set of nozzle degradation metric values,
   wherein the carrier is a movable carriage affixed to a base of the printing system and equipped with a cleaning device configured to clean the printhead, and
   wherein the set of actions adjust at least one parameter of the carrier or the cleaning device; and
   cleaning the printhead in accordance with the set of actions.
Example 2: The method of example 1, wherein the printhead health check operation comprises any of:
   evaluating a printed template using one or more camera sensors of the printing system,
   based on the evaluation, identifying a cleanliness level of the printhead using a camera of the carrier pointing to a plate surface of one or more printer nozzles of the set of printer nozzles,
   detecting, using a laser emitter-receiver pair of the carrier, a set of nozzle outs in response to a beam of the laser emitter-receiver pair crossing an expected trajectory of a jetted drop of one or more printer nozzles of the set of printer nozzles of the printhead, and
   evaluating abnormal jetting using a nozzle actuator of the carrier.
Example 3: The method of example 1 or 2, wherein the identification and recordation of the nozzle defects comprises any of identifying and recording a frequency, a severity, and a location of the nozzle defects within the printer nozzles.
Example 4: The method of one of examples 1 to 3, wherein the set of nozzle degradation metric values indicates any of:
   a number of defective nozzles per unit area,
   an average severity of defects across the printhead, and
   a distribution pattern of the nozzle defects within the printhead.
Example 5: The method of one of examples 1 to 4,
   wherein the printhead health check operation comprises capturing and analyzing printed test patterns using an optical sensor or imaging device associated with the printing system, and
   wherein the optical sensor or the imaging device is configured to detect any deviations or defects in a printed output printed using the printhead.
Example 6: The method of one of examples 1 to 5, wherein the set of actions includes any of:
   adjusting a speed of the carrier based on a concentration of the nozzle defects within a particular location of the printhead,
   modifying a motion profile of the carrier based on the concentration of the nozzle defects within the particular location of the printhead, and
   modifying a vacuum level of vacuum pads equipped on the carrier or a contact pressure of wipers equipped on the carrier based on the concentration of the nozzle defects within the particular location of the printhead.
Example 7: The method of one of examples 1 to 6, wherein the adjusted at least one parameter of the carrier includes any of:
   a speed of the carrier moving across the printhead,
   wherein the speed of the carrier increases in response to a greater concentration of the nozzle defects in a particular location,
   a motion profile of the carrier based on a distribution pattern of the nozzle defects within the printhead,
   a vacuum level of cleaning devices,
   wherein the vacuum level of the carrier increases in response to the greater concentration of the nozzle defects in the particular location, and
   a contact pressure of wipers equipped on the carrier,
   wherein the contact pressure of the wipers increases in response to the greater concentration of the nozzle defects in the particular location.
Example 8: A non-transitory, computer-readable storage medium comprising instructions recorded thereon, wherein the instructions when executed by at least one data processor of a computer system, cause the computer system to:
   perform a printhead health check operation for a printhead of a printing system, wherein the printhead health check operation includes identifying and recording a set of nozzle defects of a set of printer nozzles arranged within the printhead,
   wherein the nozzle defects of the set of nozzle defects include any of clogs, misfires, and inconsistencies of the set of printer nozzles within the printhead;
   based on the printhead health check operation, determine a set of nozzle degradation metric values of the printhead of the printing system indicating the set of nozzle defects of the set of the printer nozzles,
   wherein the set of nozzle degradation metric values is associated with a health status of the printhead nozzles;
   generate a set of actions for a carrier associated with the printhead of the printing system based on the set of nozzle degradation metric values,
   wherein the carrier is a movable carriage affixed to a base of the printing system and equipped with a cleaning device configured to clean the printhead, and
   wherein the set of actions adjust at least one parameter of the carrier or the cleaning device; and
   perform printhead cleaning in accordance with the set of actions.
Example 9: The non-transitory, computer-readable storage medium of example 8, wherein the movement of the carrier is controlled by an actuator and an actuator controller.
Example 10: The non-transitory, computer-readable storage medium of example 8 or 9, wherein moving the carrier with the adjusted at least one parameter across the printhead cause the computer system to:
   use a wiper to remove material from a plate surface of one or more printer nozzles of the set of printer nozzles,
   apply a vacuum pad to detach particles from the plate surface of the one or more printer nozzles, and
   project a flushing fluid onto the plate surface to clear one or more nozzle defects of the nozzle defects.
Example 11: The non-transitory, computer-readable storage medium of one of examples 8 to 10, wherein the printhead health check operation includes any of:
   evaluate a printed template using one or more camera sensors of the printing system,
   based on the evaluation, identify a cleanliness level of the printhead using a camera of the carrier pointing to a plate surface of one or more printer nozzles of the set of printer nozzles,
   detect, using a laser emitter-receiver pair of the carrier, a set of nozzle outs in response to a beam of the laser emitter-receiver pair crossing an expected trajectory of a jetted drop of one or more printer nozzles of the set of printer nozzles of the printhead, and
   evaluating abnormal jetting using a nozzle actuator of the carrier.
Example 12: The non-transitory, computer-readable storage medium of one of examples 8 to 11, wherein the identification and recordation of the nozzle defects comprises any of identifying and recording frequency, a severity, and a location of the nozzle defects within the printer nozzles.
Example 13: The non-transitory, computer-readable storage medium of one of examples 8 to 12, wherein the set of nozzle degradation metric values indicates any of:a number of defective nozzles per unit area,
   an average severity of defects across the printhead, and
   a distribution pattern of the nozzle defects within the printhead.
Example 14: The non-transitory, computer-readable storage medium of one of examples 8 to 13,
   wherein the printhead health check operation comprises capturing and analyzing printed test patterns using an optical sensor or imaging device associated with the printing system, and
   wherein the optical sensor or the imaging device is configured to detect any deviations or defects in a printed output printed using the printhead.
Example 15: A printing system, comprising:
   a printhead comprising a set of printer nozzles,
   wherein each printer nozzle of the set of printer nozzles is configured to print an image;
   a carrier affixed to a base of the printing system,
   wherein the carrier is a movable carriage,
   wherein the carrier is equipped with a cleaning device configured to clean the printhead; and a processing circuit configured to:
      perform a printhead health check operation for the printhead,
      wherein the printhead health check operation includes identifying and recording a set of nozzle defects of the set of printer nozzles arranged,
      wherein the nozzle defects of the set of nozzle defects include any of clogs, misfires, and inconsistencies of the set of printer nozzles;
      based on the printhead health check operation, determine a set of nozzle degradation metric values of the printhead indicating the set of nozzle defects of the set of the printer nozzles,
      wherein the set of nozzle degradation metric values is associated with a health status of the printhead nozzles;
      generate a set of actions for the carrier based on the set of nozzle degradation metric values,
      wherein the set of actions adjust at least one parameter of the carrier or the cleaning device; and
      clean the printhead in accordance with the set of actions.
Example 16: The printing system of example 15, wherein the printhead health check operation performed by the processing circuit comprises any of:
   evaluating a printed template using one or more camera sensors of the printing system,
   based on the evaluation, identifying a cleanliness level of the printhead using a camera of the carrier pointing to a plate surface of one or more printer nozzles of the set of printer nozzles,
   detecting, using a laser emitter-receiver pair of the carrier, a set of nozzle outs in response to a beam of the laser emitter-receiver pair crossing an expected trajectory of a jetted drop of one or more printer nozzles of the set of printer nozzles of the printhead, and
   evaluating abnormal jetting using a nozzle actuator of the carrier.
Example 17: The printing system of example 15 or 16, wherein the identification and recordation of the nozzle defects comprises any of identifying and recording a frequency, a severity, and a location of the nozzle defects within the printer nozzles.
Example 18: The printing system of one of examples 15 to 17, wherein the set of nozzle degradation metric values indicates any of:
   a number of defective nozzles per unit area,
   an average severity of defects across the printhead, and
   a distribution pattern of the nozzle defects within the printhead.
Example 19: The printing system of one of examples 15 to 18,
   wherein the printhead health check operation comprises capturing and analyzing printed test patterns using an optical sensor or imaging device associated with the printing system, and
   wherein the optical sensor or the imaging device is configured to detect any deviations or defects in a printed output printed using the printhead.
Example 20: The printing system of one of examples 15 to 20, wherein the set of actions includes any of:
   adjusting a speed of the carrier based on a concentration of the nozzle defects within a particular location of the printhead,
   modifying a motion profile of the carrier based on the concentration of the nozzle defects within the particular location of the printhead, and
   modifying a vacuum level of vacuum pads equipped on the carrier or a contact pressure of wipers equipped on the carrier based on the concentration of the nozzle defects within the particular location of the printhead.

The description and drawings herein are illustrative and are not to be construed as limiting. Numerous specific details are described to provide a thorough understanding of the disclosure. However, in certain instances, well-known details are not described in order to avoid obscuring the description. Further, various modifications can be made without deviating from the scope of the embodiments.

The terms used in this specification generally have their ordinary meanings in the art, within the context of the disclosure, and in the specific context where each term is used. Certain terms that are used to describe the disclosure are discussed above, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that the same thing can be said in more than one way. One will recognize that "memory" is one form of a "storage" and that the terms may on occasion be used interchangeably.

Consequently, alternative language and synonyms may be used for any one or more of the terms discussed herein, but no special significance is to be placed upon whether or not a term is elaborated or discussed herein. Synonyms for certain terms are provided. A recital of one or more synonyms does not exclude the use of other synonyms. The use of examples anywhere in this specification including examples of any term discussed herein is illustrative only and is not intended to further limit the scope and meaning of the disclosure or of any exemplified term. Likewise, the disclosure is not limited to various embodiments given in this specification.

It is to be understood that the embodiments and variations shown and described herein are merely illustrative of the principles of this invention and that various modifications may be implemented by those skilled in the art.

## Claims

1. A method for localized printhead cleaning of a printing system, comprising:
performing a printhead health check operation for a printhead of the printing system, wherein the printhead health check operation includes identifying and recording a set of nozzle defects of a set of printer nozzles arranged within the printhead,
wherein the nozzle defects of the set of nozzle defects include any of clogs, misfires, and inconsistencies of the set of printer nozzles within the printhead;
based on the printhead health check operation, determining a set of nozzle degradation metric values of the printhead of the printing system indicating the set of nozzle defects of the set of the printer nozzles,
wherein the set of nozzle degradation metric values is associated with a health status of the printhead nozzles;
defining a set of actions for a carrier associated with the printhead of the printing system based on the set of nozzle degradation metric values ,
wherein the carrier is a movable carriage affixed to a base of the printing system and equipped with a cleaning device configured to clean the printhead, and
wherein the set of actions adjust at least one parameter of the carrier or the cleaning device; and
cleaning the printhead in accordance with the set of actions.

2. The method of claim 1, wherein the printhead health check operation comprises any of:
evaluating a printed template using one or more camera sensors of the printing system,
based on the evaluation, identifying a cleanliness level of the printhead using a camera of the carrier pointing to a plate surface of one or more printer nozzles of the set of printer nozzles,
detecting, using a laser emitter-receiver pair of the carrier, a set of nozzle outs in response to a beam of the laser emitter-receiver pair crossing an expected trajectory of a jetted drop of one or more printer nozzles of the set of printer nozzles of the printhead, and
evaluating abnormal jetting using a nozzle actuator of the carrier.

3. The method of claim 1 or 2, wherein the identification and recordation of the nozzle defects comprises any of identifying and recording a frequency, a severity, and a location of the nozzle defects within the printer nozzles.

4. The method of one of claims 1 to 3, wherein the set of nozzle degradation metric values indicates any of:
a number of defective nozzles per unit area,
an average severity of defects across the printhead, and
a distribution pattern of the nozzle defects within the printhead.

5. The method of one of claims 1 to 4,
wherein the printhead health check operation comprises capturing and analyzing printed test patterns using an optical sensor or imaging device associated with the printing system, and
wherein the optical sensor or the imaging device is configured to detect any deviations or defects in a printed output printed using the printhead.

6. The method of one of claims 1 to 5, wherein the set of actions includes any of:
adjusting a speed of the carrier based on a concentration of the nozzle defects within a particular location of the printhead,
modifying a motion profile of the carrier based on the concentration of the nozzle defects within the particular location of the printhead, and
modifying a vacuum level of vacuum pads equipped on the carrier or a contact pressure of wipers equipped on the carrier based on the concentration of the nozzle defects within the particular location of the printhead.

7. The method of one of claims 1 to 6, wherein the adjusted at least one parameter of the carrier includes any of:
a speed of the carrier moving across the printhead,
wherein the speed of the carrier increases in response to a greater concentration of the nozzle defects in a particular location,
a motion profile of the carrier based on a distribution pattern of the nozzle defects within the printhead,
a vacuum level of cleaning devices,
wherein the vacuum level of the carrier increases in response to the greater concentration of the nozzle defects in the particular location, and
a contact pressure of wipers equipped on the carrier,
wherein the contact pressure of the wipers increases in response to the greater concentration of the nozzle defects in the particular location.

8. A non-transitory, computer-readable storage medium comprising instructions recorded thereon, wherein the instructions when executed by at least one data processor of a computer system, cause the computer system to:
perform a printhead health check operation for a printhead of a printing system, wherein the printhead health check operation includes identifying and recording a set of nozzle defects of a set of printer nozzles arranged within the printhead,
wherein the nozzle defects of the set of nozzle defects include any of clogs, misfires, and inconsistencies of the set of printer nozzles within the printhead;
based on the printhead health check operation, determine a set of nozzle degradation metric values of the printhead of the printing system indicating the set of nozzle defects of the set of the printer nozzles,
wherein the set of nozzle degradation metric values is associated with a health status of the printhead nozzles;
generate a set of actions for a carrier associated with the printhead of the printing system based on the set of nozzle degradation metric values ,
wherein the carrier is a movable carriage affixed to a base of the printing system and equipped with a cleaning device configured to clean the printhead, and
wherein the set of actions adjust at least one parameter of the carrier or the cleaning device; and
perform printhead cleaning in accordance with the set of actions.

9. The non-transitory, computer-readable storage medium of claim 8,
wherein the printhead health check operation comprises capturing and analyzing printed test patterns using an optical sensor or imaging device associated with the printing system, and
wherein the optical sensor or the imaging device is configured to detect any deviations or defects in a printed output printed using the printhead.

10. A printing system, comprising:
a printhead comprising a set of printer nozzles,
wherein each printer nozzle of the set of printer nozzles is configured to print an image;
a carrier affixed to a base of the printing system,
wherein the carrier is a movable carriage,
wherein the carrier is equipped with a cleaning device configured to clean the printhead; and
a processing circuit configured to:
perform a printhead health check operation for the printhead,
wherein the printhead health check operation includes identifying and recording a set of nozzle defects of the set of printer nozzles arranged,
wherein the nozzle defects of the set of nozzle defects include any of clogs, misfires, and inconsistencies of the set of printer nozzles;
based on the printhead health check operation, determine a set of nozzle degradation metric values of the printhead indicating the set of nozzle defects of the set of the printer nozzles,
wherein the set of nozzle degradation metric values is associated with a health status of the printhead nozzles;
generate a set of actions for the carrier based on the set of nozzle degradation metric values,
wherein the set of actions adjust at least one parameter of the carrier or the cleaning device; and
clean the printhead in accordance with the set of actions.

11. The printing system of claim 10, wherein the printhead health check operation performed by the processing circuit comprises any of:
evaluating a printed template using one or more camera sensors of the printing system,
based on the evaluation, identifying a cleanliness level of the printhead using a camera of the carrier pointing to a plate surface of one or more printer nozzles of the set of printer nozzles,
detecting, using a laser emitter-receiver pair of the carrier, a set of nozzle outs in response to a beam of the laser emitter-receiver pair crossing an expected trajectory of a jetted drop of one or more printer nozzles of the set of printer nozzles of the printhead, and
evaluating abnormal jetting using a nozzle actuator of the carrier.

12. The printing system of claim 10 or 11, wherein the identification and recordation of the nozzle defects comprises any of identifying and recording a frequency, a severity, and a location of the nozzle defects within the printer nozzles.

13. The printing system of one of claims 10 to 12, wherein the set of nozzle degradation metric values indicates any of:
a number of defective nozzles per unit area,
an average severity of defects across the printhead, and
a distribution pattern of the nozzle defects within the printhead.

14. The printing system of one of claims 10 to 13,
wherein the printhead health check operation comprises capturing and analyzing printed test patterns using an optical sensor or imaging device associated with the printing system, and
wherein the optical sensor or the imaging device is configured to detect any deviations or defects in a printed output printed using the printhead.

15. The printing system of one of claims 10 to 14, wherein the set of actions includes any of:
adjusting a speed of the carrier based on a concentration of the nozzle defects within a particular location of the printhead,
modifying a motion profile of the carrier based on the concentration of the nozzle defects within the particular location of the printhead, and
modifying a vacuum level of vacuum pads equipped on the carrier or a contact pressure of wipers equipped on the carrier based on the concentration of the nozzle defects within the particular location of the printhead.
